# EUROPEAN PATENT APPLICATION

(11) **EP 2 397 686 A2**
(43) Date of publication of application: **21.12.2011**
(21) Application number: 11153396.4
(22) Date of filing: 04.02.2011
(51) Int. Cl.: F03B 13/00

(54) **System for generating electricity**

(30) Priority: 28.05.2010 TW 099117192
(71) Applicant: Yu Chuan Technology Enterprise Co., Ltd, Kaohsiung County 820 (TW)
(72) Inventor: Lin, Wen-Chang, 832, Kaohsiung County (TW)
(74) Representative: Jenkins, Peter David

(57) **Abstract**

A system for generating electricity includes a housing body (21) defining an accommodating space (22), an oxyhydrogen generating unit (5), a combustion unit (6), a turbine unit (4) disposed above the combustion unit (6), and an electrical generator (32). The housing body (21) is formed with a top exhaust vent (23) and at least one air entrance (24) both in flow communication with the accommodating space (22). The air entrance (24) allows air to flow into the accommodating space (22). The oxyhydrogen generating unit (5) is used for electrolytically converting an electrolyte (54) into oxyhydrogen gas. The combustion unit (6) is operable to burn the oxyhydrogen gas from the oxyhydrogen generating unit (5) for heating air in the accommodating space (22) so as to generate an upward airflow. The turbine unit (4) is to be driven by the upward airflow to rotate. The electrical generator (32) is driven by the turbine unit (4) so as to generate electrical power.

## Description

The present invention relates to a system for generating electricity, more particularly to a system for generating electricity using a renewable energy source.

Since a reserve amount of petroleum in this planet is finite and will be exhausted one day, people skilled in the art continue to contribute to development and promotion of new energy sources and eco-friendly energy sources. It is intended to decrease the cost of electricity generation, to reduce environmental pollution, and to obtain inexhaustible energy by improving the manner of generating electricity using renewable energy sources (e.g. , wind power, hydropower, solar energy, biomass energy, geothermal energy, atmospheric heat energy, etc.) and recoverable energy sources (e.g., waste heat, energy from waste material, etc.), such that the renewable energy sources and the recoverable energy sources may gradually replace conventional thermal electricity generation and nuclear power generation.

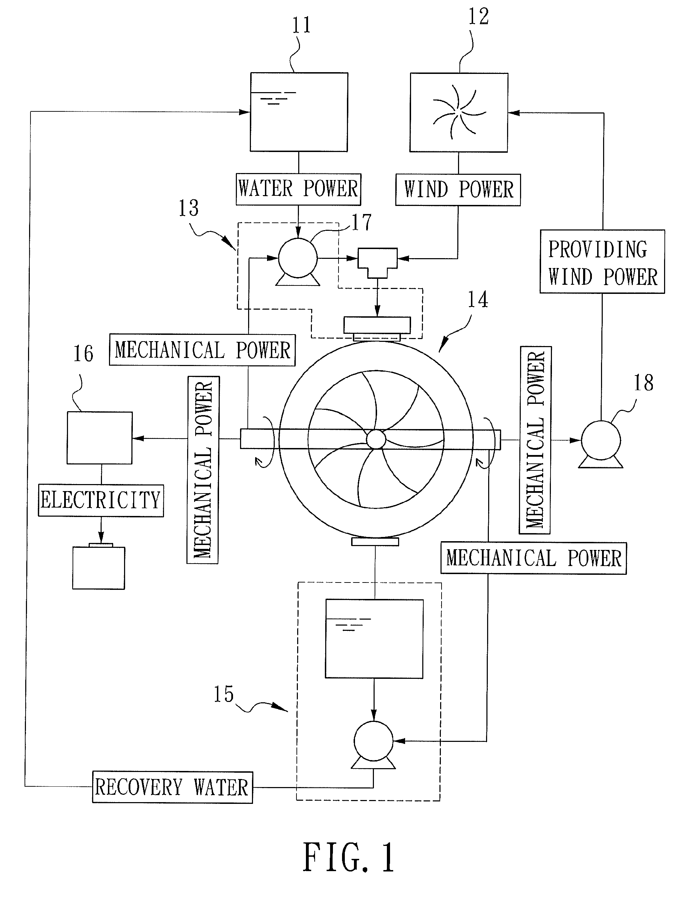

Currently, techniques of solar energy generation and wind power generation are relatively mature, and already have had general application. However, individual use of the solar energy or wind power for generating electricity is not efficient due to environmental limitations, such as duration of sunshine and wind speed of seasonal monsoon. As shown in Figure 1, Taiwanese Publication No. 200806882 discloses a conventional system for generating electricity using complementary renewable energy sources. The conventional system of Figure 1 includes a water power source 11, a wind power unit 12, a pressure booster 13 to deliver water and increase water pressure, a transfer unit 14 to transform energy source from water flow and wind flow to a mechanical power output, and a circulating unit 15 to deliver the water out of the transfer unit 14 back to the water power source 11 and the wind power unit 12. The mechanical power output of the transfer unit 14 is used for driving a generator 16 so as to generate electricity.

The conventional system for generating electricity further includes a water pump 17 for increasing the water pressure of the water flow from the water power source 11 to the transfer unit 14, and an air pump 18 for providing wind power to the wind power unit 12. However, the water pump 17 and the air pump 18 having relatively greater output horsepower are relatively expensive and, there is additional requirement of labor cost for regular maintenance of the water pump 17 and the water pump 18. Thus, relatively inexpensive pumps are usually selected for the water pump 17 and the air pump 18 of the conventional system, such that electricity generating efficiency of the conventional system is limited due to the relatively lower output horsepower of the water pump 17 and the air pump 18.

Therefore, an object of the present invention is to provide a system for generating electricity with relatively greater efficiency.

Accordingly, a system for generating electricity of the present invention includes a housing unit, an oxyhydrogen generating unit, a combustion unit, a turbine unit, and an electrical generator.

The housing unit includes a housing body that defines an accommodating space, and that is formed with a top exhaust vent and at least one air entrance both in flow communication with the accommodating space. The air entrance allows air to flow into the accommodating *space. The oxyhydrogen generating unit is operable to electrolytically convert an electrolyte into oxyhydrogen gas. The combustion unit is disposed in the accommodating space, and is coupled to the oxyhydrogen generating unit. The combustion unit is operable to burn the oxyhydrogen gas from the oxyhydrogen generating unit for heating air in the accommodating space so as to generate an upward airflow. The turbine unit is disposed in the accommodating space above the combustion unit, and is to be driven by the upward airflow to rotate. The electrical generator is coupled to and driven by the turbine unit so as to generate electrical power.

Other features and advantages of the present invention will become apparent in the following detailed description of the preferred embodiments with reference to the accompanying drawings, of which:
Figure 1 is a schematic diagram of a conventional system for generating electricity;
Figure 2 is a cross-sectional view of a first preferred embodiment of a system for generating electricity according to the present invention;
Figure 3 is a top view of the system of the first preferred embodiment;
Figure 4 is a schematic perspective view illustrating an oxyhydrogen generating unit coupled to a combustion unit of the system of the first preferred embodiment;
Figure 5 illustrates procedures for generating electrical power using the system of the first preferred embodiment; and
Figure 6 is a cross-sectional view of a second preferred embodiment of a system for generating electricity according to the present invention.

Before the present invention is described in greater detail, it should be noted that like elements are denoted by the same reference numerals throughout the disclosure.

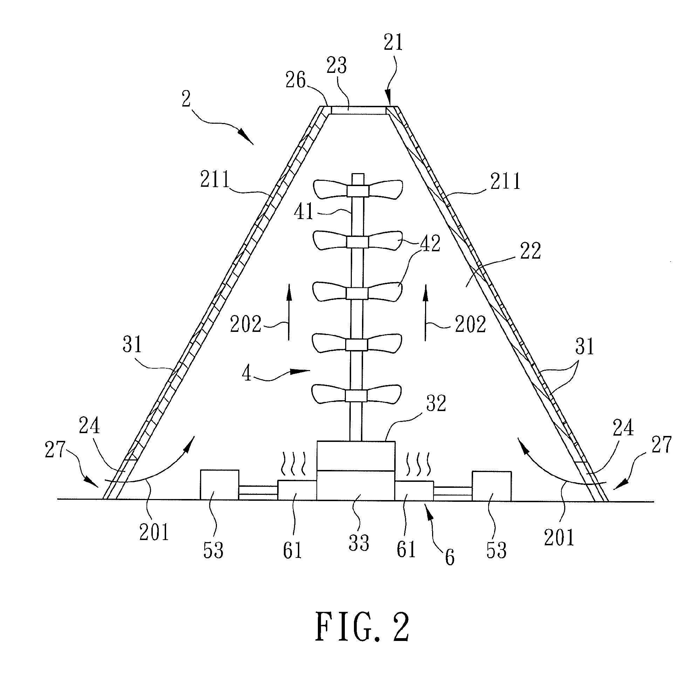

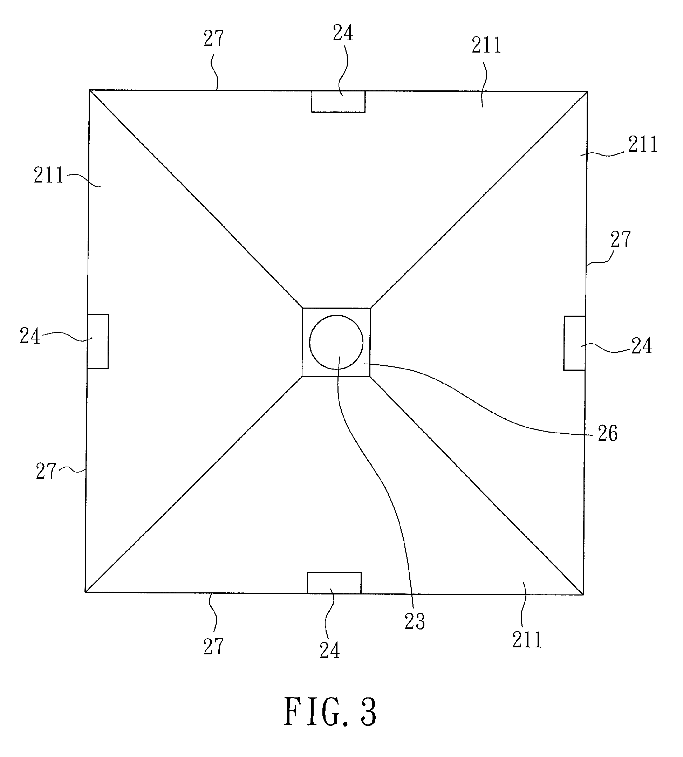

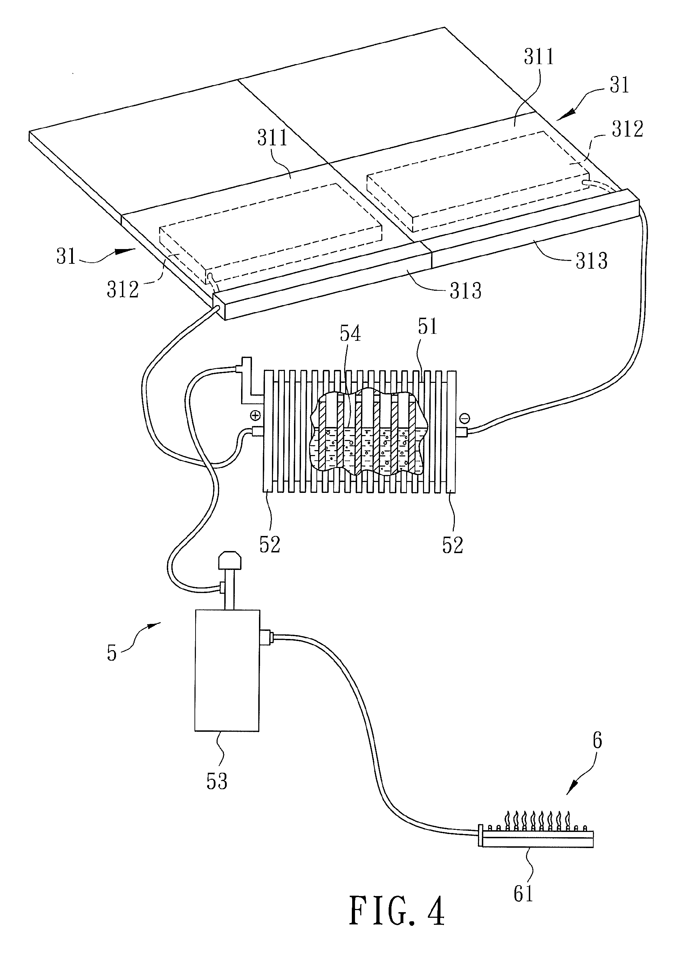

Referring to Figures 2 to 4, the first preferred embodiment of the system for generating electricity according to the present invention includes a housing unit 2, an oxyhydrogen generating unit 5, a combustion unit 6, a turbine unit 4, an electrical generator 32, and a storage unit 33.

The housing unit 2 includes a housing body 21 that defines an accommodating space 22. The oxyhydrogen generating unit 5 is used for electrolytically converting an electrolyte into oxyhydrogen gas. The combustion unit 6 is operable to burn the oxyhydrogen gas from the oxyhydrogen generating unit 5 for heating air in the accommodating space 22 so as to generate an upward airflow indicated by arrows 202 in Figure 2. The turbine unit 4 is to be driven by the upward airflow to rotate. The electrical generator 32 is coupled to and driven by the turbine unit 4 so as to generate electrical power. The storage unit 33 is coupled to the electrical generator 32 for storing the electrical power generated by the electrical generator 32.

In particular, the housing body 21 of the housing unit 2 has a top edge 26 defining a top exhaust vent 23, and a bottom part 27 formed with four air entrances 24. The top exhaust vent 23 and the air entrances 24 are all in flow communication with the accommodating space 22, and the air entrances 24 allow air to flow into the accommodating space 22. In this embodiment, the housing body 21 includes four inclined side sections 211 that cooperate to form a frustum shape (e.g., a pyramid shape), and the inclined side sections 211 are formed with the air entrances 24, respectively. The housing body 21 converges upwardly from the bottom part 27 toward the top edge 26 so that the upward airflow in the accommodating space 22 may flow toward the top exhaust vent 23. Accordingly, the configuration of the housing body 21 may help pressurize and accelerate the upward airflow in the accommodating space 22 so that a rotation speed of the turbine unit 4 is increased. It should be noted that, in other embodiments, the housing body 21 may have other shapes converging from the bottom part 27 to the top edge 26, such as a frustum of a cone and a frustum of a polygonal pyramid.

The oxyhydrogen generating unit 5 includes a plurality of solar energy converters 31, an electrolyte container 51 for receiving an electrolyte 54, and a plurality of electrode plates 52 disposed in the electrolyte container 51 and spaced apart from each other.

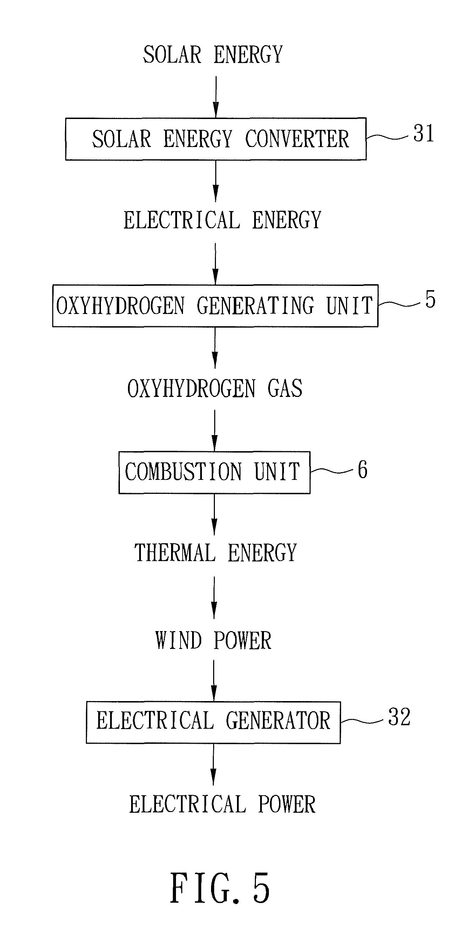

Further referring to Figure 5, the solar energy converters 31 are disposed on the inclined side sections 211 of the housing body 21 for converting solar energy into an electrical output, respectively. Each of the solar energy converters 31 includes a solar panel 311 for converting solar energy into electrical energy, a storage element 312 coupled to the solar panel 311 for storing the electrical energy, and a control element 313 coupled to the storage element 312 and the electrode plates 52 for controlling supply of the electrical output to the electrode plates 52. The electrode plates 52 are used for electrolytically converting the electrolyte 54 stored in the electrolyte container 51 into the oxyhydrogen gas using the electrical outputs from the solar energy converters 31. In this embodiment, the oxyhydrogen generating unit 5 further includes a gas container 53 coupled to the electrolyte container 51 for receiving and storing the oxyhydrogen gas.

The combustion unit 6 is disposed in the accommodating space 22 and includes two burners 61 each of which is coupled to the gas container 53 of the oxyhydrogen generating unit 5. Thus, the burners 61 are operable to burn the oxyhydrogen gas from the gas container 53 to generate thermal energy for heating the air in the accommodating space 22 so as to generate the upward airflow indicated by arrows 202 in Figure 2 for driving the turbine unit 4 to rotate. Moreover, since the air in the accommodating space 22 flows upwardly toward the top exhaust vent 23, the pressure inside the accommodating space 22 is relatively lower than the external pressure. Accordingly, external air may flow into the accommodating space 22 through the air entrances 24 as indicated by arrows 201 in Figure 2.

It should be noted that, in practice, the system of this invention may include one or more oxyhydrogen generating units 5 according to a demand amount of the oxyhydrogen gas. Moreover, the combustion unit 6 may include a specific number of the burners 61 for a different size of the housing body 21 in another embodiment. The number of the burners 61 of the combustion unit 6 may be increased for acceleratively heating the air in the accommodating space 22 or for increasing temperature of the air in the accommodating space 22.

The turbine unit 4 is disposed in the accommodating space 22 above the combustion unit 6, and includes a rotary shaft 41 and a plurality of blade units 42 that are disposed on the rotary shaft 41 and that are spaced apart from each other. The rotary shaft 41 is coupled to the electrical generator 32 for driving the electrical generator 32 to generate the electrical output. The blade units 42 are to be driven by the upward airflow to rotate, and the rotary shaft 41 is co-rotatable with the blade units 42 so as to allow a coil inside the electrical generator 32 (not shown) to generate an induced current and to provide the electrical power for storage in the storage unit 33. Since the components and operation of the electrical generator 32 are well known to those skilled in the art, details thereof will be omitted herein for the sake of brevity.

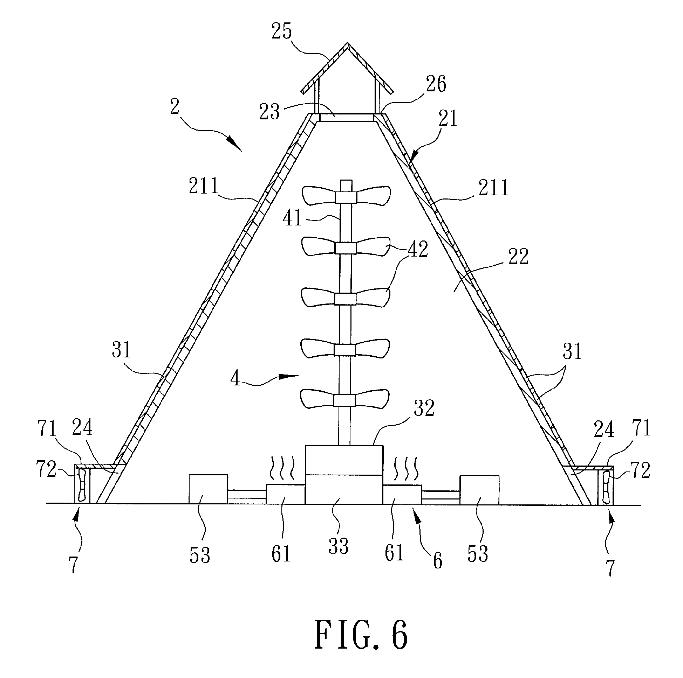

Referring to Figure 6, the second preferred embodiment of the system for generating electricity according to the present invention is shown to be similar to the first preferred embodiment. In this embodiment, the housing unit 2 further includes a cowl 25 disposed on the top edge 26 of the housing body 21 for covering the top exhaust vent 23. The cowl 25 is configured to prevent external articles and rainwater from falling through the top exhaust vent 23 into the accommodating space 22 in the housing body 21 so as to protect the components inside the housing body 21.

Additionally, the system of this embodiment further includes four directing components 7 (only two can be seen due to the viewing angle) corresponding to the air entrances 24, respectively. Each of the directing components 7 includes a base 71 disposed on a corresponding one of the inclined side sections 211 of the housing body 21 and registered with a corresponding one of the air entrances 24, and a fan 72 disposed on the base 71 for directing air to flow into the accommodating space 22 through the corresponding one of the air entrances 24. Since the directing components 7 are capable of increasing an amount of air flowing into the accommodating space 22, volume of the upward airflow in the accommodating space 22 is increased thereby. Further, the rotation speed of the turbine unit 4 is also increased so as to enhance the electricity generating efficiency.

In conclusion, the system for generating electricity according to this invention has the following advantages. The electricity generating efficiency of the system of this invention can be effectively enhanced by increasing the number of the blade units 42 or by forming the housing body 21 with a greater number of air entrances 24. Further, the configuration of the system of this invention is simpler than the configuration of the conventional system for generating electricity shown in Figure 1 since the conventional system needs the pressure booster 13 for increasing water pressure and the circulating unit 15 for recovery of the water and wind used for generating electricity. Moreover, the solar energy converters 31 are operable to convert solar energy into electrical energy that is used for electrolytically converting the electrolyte 54 into the oxyhydrogen gas, and the combustion unit 6 is operable to burn the oxyhydrogen gas for heating air in the accommodating space 22 so as to generate the upward airflow without release of pollutants.

## Claims

1. A system for generating electricity, **characterized by**:
a housing unit (2) including a housing body (21) that defines an accommodating space (22), and that is formed with a top exhaust vent (23) and at least one air entrance (24) both in flow communication with said accommodating space (22), said air entrance (24) allowing air to flow into said accommodating space (22);
an oxyhydrogen generating unit (5) for electrolytically converting an electrolyte (54) into oxyhydrogen gas;
a combustion unit (6) disposed in said accommodating space (22) and coupled to said oxyhydrogen generating unit (5), said combustion unit (6) being operable to burn the oxyhydrogen gas from said oxyhydrogen generating unit (5) for heating air in said accommodating space (22) so as to generate an upward airflow;
a turbine unit (4) disposed in said accommodating space (22) above said combustion unit (6) and to be driven by the upward airflow to rotate; and
an electrical generator (32) coupled to and driven by said turbine unit (4) so as to generate electrical power.

2. The system as claimed in Claim 1, further **characterized by** a storage unit (33) coupled to said electrical generator (32) for storing the electrical power generated by said electrical generator (32).

3. The system as claimed in any one of Claims 1 and 2, **characterized in that** said housing body (21) of said housing unit (2) converges upwardly toward said top exhaust vent (23).

4. The system as claimed in any one of Claims 1 to 3, **characterized in that** said housing body (21) of said housing unit (2) has a top edge (26) defining said top exhaust vent (23), and a bottom part (27) formed with said air entrance (24).

5. The system as claimed in any one of Claims 1 to 4, further **characterized in that** said housing body (21) of said housing unit (2) includes a plurality of inclined side sections (211) that cooperate to form a frustum shape, at least one of said inclined side sections (211) being formed with said air entrance (24).

6. The system as claimed in any one of Claims 1 to 4, **characterized in that** said oxyhydrogen generating unit (5) includes:
a solar energy converter (31) for converting solar energy into an electrical output;
an electrolyte container (51) for receiving the electrolyte (54); and
a plurality of electrode plates (52) disposed in said electrolyte container (51), spaced apart from each other, and coupled to said solar energy converter (31) for electrolytically converting the electrolyte (54) into the oxyhydrogen gas using the electrical output therefrom.

7. The system as claimed in Claim 6, further **characterized in that** said housing body (21) of said housing unit (2) includes a plurality of inclined side sections (211) that cooperate to form a frustum shape, at least one of said inclined side sections (211) being formed with said air entrance (24), said solar energy converter (31) being disposed on a corresponding one of said inclined side sections (211).

8. The system as claimed in any one of Claims 6 and 7, further **characterized in that** said solar energy converter (31) includes a solar panel (311) for converting solar energy into electrical energy, a storage element (312) coupled to said solar panel (311) for storing the electrical energy, and a control element (313) coupled to said storage element (312) and said electrode plates (52) for controlling supply of the electrical output to said electrode plates (52).

9. The system as claimed in any one of Claims 6 to 8, further **characterized in that** said oxyhydrogen generatingunit (5) includes a gas container (53) coupled to said electrolyte container (51) for receiving the oxyhydrogen gas.

10. The system as claimed in any one of Claims 1 to 9, **characterized in that** said combustion unit (6) includes a burner (61).

11. The system as claimed in any one of Claims 1 to 10, **characterized in that** said turbine unit (4) includes a rotary shaft (41) and at least one blade unit (42) on said rotary shaft (41).

12. The system as claimed in any one of Claims 1 to 11, **characterized in that** said housing body (21) of said housing unit (2) has a top edge (26) defining said top exhaust vent (23), and said housing unit (2) further includes a cowl (25) disposed on said top edge (26) for covering said top exhaust vent (23).

13. The system as claimed in any one of Claims 1 to 12, **characterized in that** said housing unit (2) includes at least one directing component (7), said directing component (7) including a base (71) disposed on said housing body (21) and registered with said air entrance (24), and a fan (72) disposed on said base (71) for directing air to flow into said accommodating space (22) through said air entrance (24).
